# EUROPEAN PATENT SPECIFICATION

(11) **EP 2 499 005 B1**
(45) Date of publication and mention of the grant of the patent: **22.01.2014**
(21) Application number: 10807654.8
(22) Date of filing: 10.11.2010
(51) Int. Cl.: B60C 1/00, C08K 5/37, C08K 5/54, C08K 5/548, C08L 9/06

(54) **TREAD MIX**
REIFENPROFILMISCHUNG
MÉLANGE POUR BANDE DE ROULEMENT

(30) Priority: 10.11.2009 IT TO20090859
(43) Date of publication of application: 19.09.2012
(73) Proprietor: Bridgestone Corporation, Chuo-ku Tokyo 104-8340 (JP)
(72) Inventor: DI RONZA, Raffaele, I-00146 Roma (IT); PRIVITERA, Davide, I-67051 Avezzano (IT)
(74) Representative: Bosman, Cesare
(86) International application number: PCT/IB2010/003082
(87) International publication number: WO 2011/058441

(56) References cited:
- EP-A1- 1 818 188
- EP-A1- 1 967 387
- WO-A1-2009/092811
- US-A- 4 143 027
- US-A1- 2007 037 915
- US-A1- 2007 203 274
- US-A1- 2008 161 458

## Description

### TECHNICAL FIELD

The present invention relates to a tread mix.
- the term "silica" is intended to mean a silicon-dioxide-based reinforcing agent;
- the term "cross-linkable, unsaturated-chain polymer base" is intended to mean any natural or synthetic non-cross-linked polymer capable of assuming all the chemical-physical and mechanical characteristics typically assumed by elastomers when cross-linked (cured) with sulphur-based systems.

### BACKGROUND ART

As is known, part of the research carried out in the tyre industry is aimed at achieving treads with improved wet-pavement road-holding, rolling resistance, and wear resistance performance.

While all three of the above characteristics can be improved independently, it is more difficult to improve them simultaneously, without improvement to one impairing one or both of the others.

In this connection, silica has long been used, as a partial or total substitute for carbon black, as a tread mix reinforcing filler, because of its advantages in terms of rolling resistance and wet-pavement road-holding performance.

Silica is used in combination with silane bonding agents, which bond with silanol groups to prevent the formation of hydrogen bonds between silica particles, while at the same time attaching silica chemically to the polymer base.

Trialkoxymercaptoalkyl-silanes are a particularly interesting class of silane bonding agents, mainly because of the advantages they afford in terms of reducing rolling resistance and volatile substance emission.

The best advantages are obtained from the compound of formula I.

SH(CH₂)₃SiR¹R²₂ (I)

where :
R¹ is -OCH₂CH₃ and
R² is -O(CH₂CH₂O)₅(CH₂)₁₂CH₃

A need is felt for a mix capable of producing a tread which, with respect to the known art, presents a simultaneous improvement in wet-pavement road-holding, rolling resistance, and wear resistance performance.

The Applicant has surprisingly devised a tread mix capable of achieving this goal.

### DISCLOSURE OF INVENTION

According to the present invention, there is provided a tread mix comprising a cross-linkable unsaturated-chain polymer base; curing agents; silica; and a silane bonding agent; said mix being characterized in that said polymer base comprises a first SBR rubber comprising 20-40% of a first fraction with a mean molecular weight of 50-100x10³ and a molecular weight distribution of ≤1.5, and 80-60% of a second fraction with a mean molecular weight of 800-1500x10³ and a mean molecular weight distribution of ≤3.0; and in that said silane bonding agent is a mercaptosilane of formula I :

SH(CH₂)₁SiR¹R²₂ (I)

where :
l is an integer of 1 to 6,
R¹ is -O(CH₂)_{g}CH₃,
R² is -O(CH₂CH₂O)ₘ(CH₂)ₙCH₃,
g is an integer of 0 to 5,
m is an integer of 2 to 8, and
n is an integer of 3 to 20.

The silica preferably has a surface area of 170 to 230 m²/g.

1 is preferably 3.

Preferably, g is 1, m is 5, and n is 12.

The tread mix preferably comprises 40-130 phr of said silica, and 4-18 phr of said silane bonding agent.

The first SBR rubber preferably has a 25-45% styrene content, and a 20-70% vinyl content.

The tread mix preferably comprises 20-60 phr of said first SBR rubber.

The tread mix preferably comprises 20-80 phr of a second SBR rubber. Even more preferably, the second SBR rubber comprises 20-60 phr of S-SBR with a mean molecular weight of 800-1500x10³; and 20-60 phr of E-SBR with a mean molecular weight of 500-900x10³.

### BEST MODE FOR CARRYING OUT THE INVENTION

The following are non-limiting examples, for a clearer understanding of the present invention.

S-SBR indicates a styrene-butadiene rubber obtained from a solution; and E-SBR a styrene-butadiene rubber obtained from emulsion.

### EXAMPLES

Two control mixes (A, B) and three mixes in accordance with the teachings of the present invention (C, D, E) were produced, and each was tested to determine its characteristics in terms of wet-pavement road-holding, rolling resistance, and wear resistance.

The mixes described in the examples were produced as follows :
- mix preparation -

### (first mixing stage)

A stationary 230-270-litre tangential-rotor mixer was first loaded with the cross-linkable polymer base, silica, silane bonding agent, and oil, to a fill factor of 66-72%.

The mixer was operated at a speed of 40-60 rpm, and the resulting mix unloaded on reaching a temperature of 140-160°C.

### (second mixing stage)

The mix from the preceding stage was mixed again in a mixer operated at a speed of 40-60 rpm, and unloaded on reaching a temperature of 130-150°C.

### (third mixing stage)

The curing system was added to the mix from the preceding stage, to a fill factor of 63-67%.

The mixer was operated at a speed of 20-40 rpm, and the resulting mix unloaded on reaching a temperature of 100-110°C.

Table I shows the compositions of the five mixes in phr.

**TABLE I**

| | A | B | C | D | E |
|---|---|---|---|---|---|
| S-SBR* | 80 | 80 | 80 | 60 | 40 |
| E-SBR* | 20 | 20 | 20 | 20 | 20 |
| S-SBR** | -- | -- | -- | 20 | 20 |
| SILICA 1 | 78 | -- | -- | -- | -- |
| SILICA 2 | -- | 85 | 85 | 85 | 85 |
| SILANE 1 | 7.8 | 8.5 | -- | -- | -- |
| SILANE 2 | -- | -- | 8.5 | 8.5 | 8.5 |
| OIL | 7.5 | 7.5 | 7.5 | 7.5 | 7.5 |
| ZINC | 1.2 | 1.2 | 1.2 | 1.2 | 1.2 |

S-SBR* and E-SBR* have mean molecular weights of 800-1500x10³ and 500-900x10³ respectively. More specifically, S-SBR* has a 10-45% styrene content and a 20-70% vinyl content; and E-SBR* a 20-45% styrene content.

S-SBR** is a rubber with a 24-45% styrene content and a 20-70% vinyl content, and comprises :
- 20-40% of a first fraction with a mean molecular weight of 50-100x10³ and a molecular weight distribution of ≤1.5; and
- 80-60% of a second fraction with a mean molecular weight of 800-1500x10³ and a molecular weight distribution of ≤3.0.

SILICA 1 is marketed by EVONIK under the trade name VN3, and has a surface area of 170 m²/g.

SILICA 2 is marketed by RHODIA under the trade name MP200, and has a surface area of 210 m²/g and 55 nm diameter aggregates.

SILANE 1 is a silane bonding agent marketed by DEGUSSA under the trade name SI75.

SILANE 2 is mercaptosilane of formula :

SH(CH₂)₃SiR¹R²₂

where :
R¹ is -O(CH₂)CH₃
R² is -O(CH₂CH₂O)₅(CH₂)₁₂CH₃

As stated, mixes A-E were tested to determine wet-pavement road-holding, rolling resistance, and wear resistance performance.

More specifically, E' values were measured at 30°C and TanD values at different temperatures as per ASTM Standard D5992, and wear resistance was measured as per DIN Standard 53 516.

As anyone skilled in the art knows, the TanD values indicate wet-pavement road-holding and rolling resistance.

To show more clearly the advantages of the mixes according to the present invention, the wet-pavement road-holding, rolling resistance, and wear resistance values were indexed on the basis of the mix A results.

Table II shows the test results.

**TABLE II**

| | A | B | C | D | E |
|---|---|---|---|---|---|
| E' at 30°c | 16.1 | 16.1 | 12.0 | 14.2 | 16.1 |
| TanD at 0°C | 0.711 | 0.711 | 0.700 | 0.733 | 0.748 |
| TanD at 30°C | 0.434 | 0.420 | 0.363 | 0.380 | 0.375 |
| TanD at 60°C | 0.292 | 0.272 | 0.192 | 0.181 | 0.172 |
| Wet | 100 | 100 | 98 | 101 | 103 |
| Rolling resistance | 100 | 103 | 115 | 116 | 117 |
| Wear resistance | 100 | 110 | 105 | 110 | 115 |

As shown in Table II, the mixes according to the present invention ensure a greater overall improvement in all three characteristics as compared with control mixes A and B, which lack high-surface-area silica combined with mercaptosilane of formula I.

Mixes D and E represent a preferred embodiment of the present invention, in which, together with high-surface-area silica combined with mercaptosilane of formula I, a particular S-SBR rubber is used containing a low-molecular-weight fraction and a high-molecular-weight fraction, so that mixes D and E provide for an even greater simultaneous improvement in all three characteristics.

## Claims

1. A tread mix comprising a cross-linkable unsaturated-chain polymer base; curing agents; silica; and a silane bonding agent; said mix being **characterized in that** said polymer base comprises a first SBR rubber comprising 20-40% of a first fraction with a mean molecular weight of 50-100x10³ and a molecular weight distribution of ≤1.5, and 80-60% of a second fraction with a mean molecular weight of 800-1500x10³ and a molecular weight distribution of ≤3.0; and **in that** said silane bonding agent is a mercaptosilane of formula I :
SH(CH₂)₁SiR¹R²₂ (I)
where :
l is an integer of 1 to 6,
R¹ is -O(CH₂)_{g}CH₃,
R² is -O(CH₂CH₂O)ₘ(CH₂)ₙCH₃,
g is an integer of 0 to 5,
m is an integer of 2 to 8, and
n is an integer of 3 to 20.

2. A tread mix as claimed in Claim 1, **characterized in that** said silica has a surface area of 170 to 230 m²/g

3. A tread mix as claimed in Claim 1 or 2, **characterized in that** l is 3, g is 1, m is 5, and n is 12.

4. A tread mix as claimed in one of the foregoing Claims, **characterized by** comprising 40-130 phr of said silica and 4-18 phr of said silane bonding agent.

5. A tread mix as claimed in one of the foregoing Claims, **characterized in that** said first SBR rubber has a styrene content of 25-45% and a vinyl content of 20-70%.

6. A tread mix as claimed in Claim 5, **characterized by** comprising 20-60 phr of said first SBR rubber.

7. A tread mix as claimed in Claim 6, **characterized by** comprising 20-80 phr of a second SBR rubber.

8. A tread mix as claimed in Claim 7, **characterized in that** said second SBR rubber comprises 20-60 phr of S-SBR with a mean molecular weight of 800-1500x10³; and 20-60 phr of E-SBR with a mean molecular weight of 500-900x10³.

9. A tread made from a mix as claimed in any one of the foregoing Claims.

10. A tyre comprising a tread as claimed in Claim 9.

## Patentansprüche

1. Reifenprofilgemisch, umfassend eine vernetzbare Polymerbasis mit ungesättigten Ketten; Härtungsmittel; Siliciumdioxid und ein Silanbindungsmittel; wobei das Gemisch **dadurch gekennzeichnet ist, dass** die Polymerbasis einen ersten SBR-Kautschuk, umfassend 20-40% einer ersten Fraktion mit einem mittleren Molekulargewicht von 50-100x10³ und einer Molekulargewichtsverteilung von ≤1,5 und 80-60% einer zweiten Fraktion mit einem mittleren Molekulargewicht von 800-1500x10³ und einer Molekulargewichtsverteilung von ≤3,0 umfasst; und dass das Silanbindungsmittel ein Mercaptosilan der Formel I ist:
SH(CH₂)ₗSiR¹R²₂ (I)
wobei:
l eine ganze Zahl von 1 bis 6 ist,
R¹ -O(CH₂)_{g}CH₃ ist,
R² -O(CH₂CH₂O)ₘ(CH₂)ₙCH₃ ist,
g eine Ganze Zahl von 0 bis 5 ist,
m eine ganze Zahl von 2 bis 8 ist und
n eine ganze Zahl von 3 bis 20 ist.

2. Reifenprofilgemisch nach Anspruch 1, **dadurch gekennzeichnet, dass** das Siliciumdioxid einen Oberflächenbereich von 170 bis 230 m²/g aufweist.

3. Reifenprofilgemisch nach Anspruch 1 oder 2, **dadurch gekennzeichnet, dass** 13 ist, g 1 ist, m 5 ist und n 12 ist.

4. Reifenprofilgemisch nach einem der vorangehenden Ansprüche, **dadurch gekennzeichnet, dass** es 40-130 phr des Siliciumdioxids und 4-18 phr des Silanbindungsmittels umfasst.

5. Reifenprofilgemisch nach einem der vorangehenden Ansprüche, **dadurch gekennzeichnet, dass** der erste SBR-Kautschuk einen Styrolgehalt von 25-45% und einen Vinylgehalt von 20-70% aufweist.

6. Reifenprofilgemisch nach Anspruch 5, **dadurch gekennzeichnet dass** es 20-60 phr des ersten SBR-Kautschuks umfasst.

7. Reifenprofilgemisch nach Anspruch 6, **dadurch gekennzeichnet dass** es 20-80 phr eines zweiten SBR-Kautschuks umfasst.

8. Reifenprofilgemisch nach Anspruch 7, **dadurch gekennzeichnet, dass** der zweite SBR-Kautschuk 20-60 phr S-SBR mit einem mittleren Molekulargewicht von 800-1500x10³ und 20-60 phr E-SBR mit einem mittleren Molekulargewicht von 500-900x10³ umfasst.

9. Reifenprofil, das aus einem Gemisch nach einem der vorangehenden Ansprüche hergestellt ist.

10. Reifen, der ein Reifenprofil nach Anspruch 9 umfasst.

## Revendications

1. Mélange pour bande de roulement, comprenant une base polymère à chaîne insaturée réticulable ; des durcisseurs ; de la silice ; et un agent de liaison du type silane ; ledit mélange étant **caractérisé en ce que** ladite base polymère comprend un premier caoutchouc SBR comprenant 20 à 40 % d'une première fraction ayant un poids moléculaire moyen de 50-100 x 10³ et une distribution des poids moléculaires ≤ 1,5, et 80 à 60 % d'une seconde fraction ayant un poids moléculaire moyen de 800-1500 x 10³ et une distribution des poids moléculaires ≤ 3,0 ; et ce que ledit agent de liaison du type silane est un mercaptosilane de formule I :
SH(CH₂)ₗSiR¹R²₂ (I)
dans laquelle :
1 représente un nombre entier de 1 à 6,
R¹ représente un groupe -O(CH₂)_{g}CH₃,
R² représente un groupe -O(CH₂CH₂O)ₘ(CH₂)ₙCH₃,
g représente un nombre entier de 0 à 5,
m représente un nombre entier de 2 à 8, et
n représente un nombre entier de 3 à 20.

2. Mélange pour bande de roulement suivant la revendication 1, **caractérisé en ce que** ladite silice a une surface spécifique de 170 à 230 m²/g.

3. Mélange pour bande de roulement suivant la revendication 1 ou 2, **caractérisé en ce que** 1 est égal à 3, g est égal à 1, m est égal à 5 et n est égal à 12.

4. Mélange pour bande de roulement suivant l'une des revendications précédentes, **caractérisé en ce qu'**il comprend 40 à 130 phr de ladite silice et 4 à 18 phr dudit agent de liaison du type silane.

5. Mélange pour bande de roulement suivant l'une des revendications précédentes, **caractérisé en ce que** ledit premier caoutchouc SBR a une teneur en styrène de 25 à 45 % et une teneur en groupes vinyle de 20 à 70 %.

6. Mélange pour bande de roulement suivant la revendication 5, **caractérisé en ce qu'**il comprend 20 à 60 phr dudit premier caoutchouc SBR.

7. Mélange pour bande de roulement suivant la revendication 6, **caractérisé en ce qu'**il comprend 20 à 80 phr d'un second caoutchouc SBR.

8. Mélange pour bande de roulement suivant la revendication 7, **caractérisé en ce que** ledit second caoutchouc SBR comprend 20 à 60 phr de S-SBR ayant un poids moléculaire moyen de 800-1500 x 10³ ; et 20 à 60 phr de E-SBR ayant un poids moléculaire moyen de 500-900 x 10³.

9. Bande de roulement produite à partir d'un mélange suivant l'une quelconque des revendications.

10. Bandage pneumatique comprenant une bande de roulement suivant la revendication 9.
